Europäisches Patentamt

(19) European Patent Office

Office européen des brevets

(11) Publication number: **0 249 918 B1**

# EUROPEAN PATENT SPECIFICATION

(12)

(45) Date of publication of patent specification: **04.09.91**    (51) Int. Cl.⁵: **B29D 30/72**, B60C 13/02

(21) Application number: **87108569.2**

(22) Date of filing: **13.06.87**

(54) Premolded tire sidewall appliques and process for applying same.

(30) Priority: **17.06.86 US 875133**

(43) Date of publication of application:
**23.12.87 Bulletin  87/52**

(45) Publication of the grant of the patent:
**04.09.91 Bulletin  91/36**

(84) Designated Contracting States:
**DE ES FR GB IT LU**

(56) References cited:
**EP-A- 0 212 538**
**EP-A- 0 213 478**
**DE-A- 3 046 625**
**GB-A- 2 006 693**

**PATENT ABSTRACTS OF JAPAN, vol. 7, no.**
**254 (M-255)[1399], 11th November 1983; &**
**JP-A-58 138 630 (TOYO GOMU KOGYO K.K.)**
**17-08-1983**

(73) Proprietor: **THE FIRESTONE TIRE & RUBBER**
**COMPANY**
**1200 Firestone Parkway**
**Akron, Ohio 44317(US)**

(72) Inventor: **Bohm, Georg G.A.**
**1212 Sunset View Drive**
**Akron Ohio 443132(US)**

(74) Representative: **von Raffay, Vincenz, Dipl.-Ing.**
**et al**
**Patentanwälte Raffay, Fleck & Partner Post-**
**fach 32 32 17**
**W-2000 Hamburg 13(DE)**

## Description

The invention relates to an assembly for applying decorative pieces to the sidewall of a tire according to the preamble of claim 1 and a corresponding process according to the preamble of claim 8.

Such an assembly and process are known from the DE-A-30 46 625.

Generally speaking, the manufacture of tires is significantly complicated by the imparting of decorations onto one of the tire's sidewalls. Such decorations may take the form of strips, either singular or plural, logos, lettering, and the like. Presently, this is accomplished by fabrications using the extrusion and calendaring of a number of black and white components which are subsequently combined into a decorative sidewall preassembly. All the tire components, along with the tire sidewall preassembly are then applied in sequence to the tire building drum to form the green or uncured tire. Following the tire curing operation, the decorative sidewall side of the tire is carefully ground and buffed to expose the decorative sidewall area which was previously protected by a cover strip. These complex steps detrimentally affect the efficiency of the tire manufacturing process. Further, many interfaces produced in construction of the decorative sidewall tire affect the structural integrity of the tire and its durability and performance on the road.

It is known in the tire industry that different tire carcasses must be formed for blackwall tires than those having decorative features on the sidewalls thereof. Heretofore, each has been constructed differently. Modern tires are designed with increasingly thinner sidewalls, such that the decorative portion of the sidewall is becoming an increasingly significant part of the tire sidewall structure itself. Since the decorative portion is typically not a good structural element, it is becoming increasingly difficult to manufacture modern tires having sidewalls with decorative features thereon. Previously known tires with decorative sidewalls have been characterized by a plurality of boundaries defining the different layers of the decorative structure, each boundary presenting an area for the development of a potential defect.

To obviate the shortcomings of the prior art, it has been proposed to replace the previously known sidewall decorative features with appliques of polymeric paint which are applied to stock blackwall tires prior to the curing operation on the tire.

In light of the foregoing, it is the first aspect of the invention to provide a tire having a decorative applique and a process for making the same in which a blackwall tire may be selectively employed.

Another aspect of the invention is the provision of a tire having a decorative applique and the process for making the same in which such process is a simple one, eliminating the steps and material previously used for co-extruding and assembling a sidewall band or decorative material.

Still a further aspect of the invention is the provision of a tire having a decorative applique and the process for making the same in which little or no waste is experienced in the manufacturing process.

An additional aspect of the invention is the provision of a tire having a decorative applique and the process for making the same which is given to numerous and varying designs, colors, configurations, and the like.

Another aspect of the invention is the provision of a tire having a decorative applique and the process for making the same in which tire integrity is enhanced by reduction of the number of components comprising the decorative portion.

Yet a further aspect of the invention is the provision of a tire having a decorative applique and the process for making the same in which the sidewall construction is uniform, with no interruptions or changes of materials or modulus therein.

Still a further aspect of the invention is the provision of a tire having a decorative applique and the process for making the same in which the applique is actually cured or vulcanized to the tire.

The foregoing and other aspects of the invention are achieved by an assembly for applying decorative pieces to the sidewall of a tire , as characterized in claim 1.

Still further aspects of the invention are obtained by a process for applying decorative pieces to a sidewall of a tire, as characterized in claim 8.

## BRIEF DESCRIPTION OF THE DRAWINGS

For a complete understanding of the objects, techniques and structure of the invention reference should be had to the following detailed description and accompanying drawing wherein:

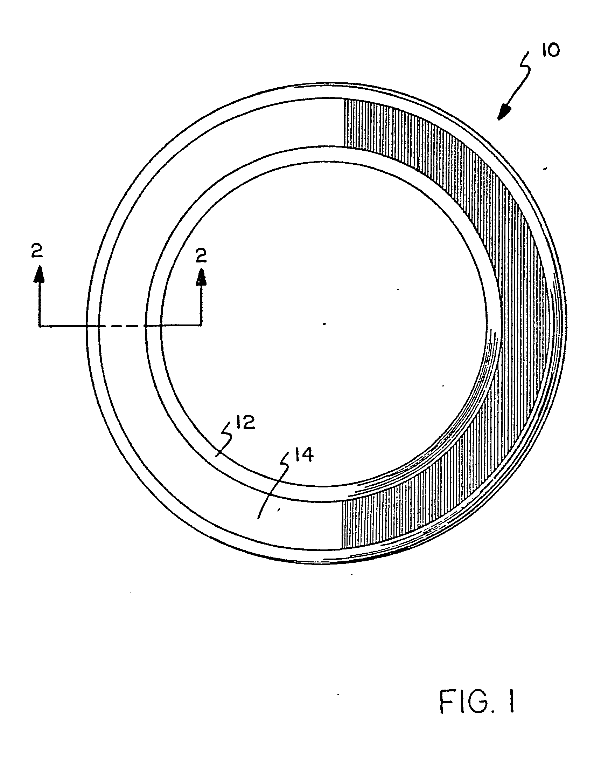

Fig. 1 is a top plan view of a sidewall applique and carrier ring according to the invention;

Fig. 2, comprising Figs. 2a-2l present cross-sectional views of various embodiments of the invention as taken along the line 2-2 of Fig. 1;

Fig. 3 is a side-sectional view of the applique of the invention in application to the sidewall of a tire during cure; and

Fig. 4 is an illustrative view of the apparatus for carrying out the process of the invention.

Referring now to the drawings and more particularly Fig. I, it can be seen that an applique-bearing substrate assembly according to the invention is designated generally by the numeral I0. The

substrate l2 preferably consists of an annular ring constructed of metal such as aluminum or steel having good heat conductive characteristics. It has also been found that certain plastics or polymeric materials such as fiber reinforced plastics are suitable for the substrate construction. It is desired that the substrate l2 be of sufficient thickness to provide a degree of rigidity to the annular ring to facilitate handling of the same.

The applique 14 is maintained upon the substrate l2 in the configuration desired for application to the sidewall of a tire. As shown in Fig. I, the applique is simply a sidewall band, but it should be understood that the applique could take any of numerous configurations. In the preferred embodiment of the invention, the applique is of a rubber composition, typically of the same material as standardly used in tire construction for development of a "white sidewall." Accordingly, it is flexible, weather stable, and wear resistant. It should also be appreciated that, for increased abrasion resistance or ease of processing, other materials such as zinc methacrylate-based compounds or other new materials including thermoplastic elastomers could be used.

The process for depositing the applique 14 upon the substrate l2 and for subsequently achieving the transfer of the applique from the substrate to the tire sidewall will be presented hereinafter. Suffice it to say at this time that the substrate l2 is a carrier for the applique 14, that the applique 14 is registered with the sidewall of the tire in the tire press, that the applique bonds or fuses without distortion of the applique to the green tire by cure or vulcanization within the tire press, and that the substrate l2 may be readily stripped from the applique 14 following cure.

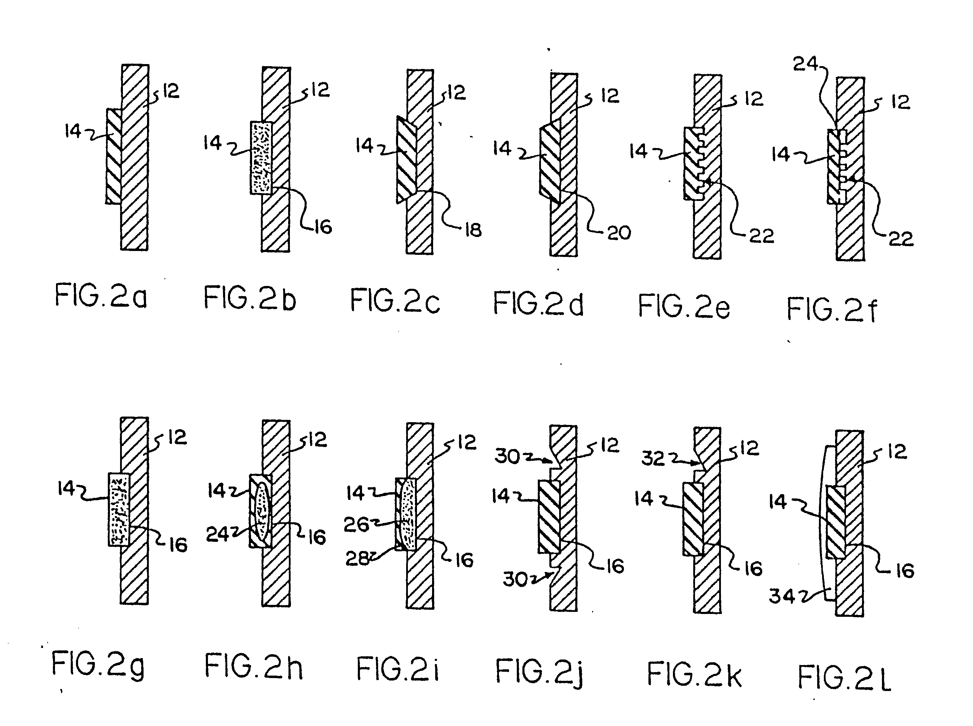

Various embodiments of the assembly l0 are shown in cross section in Fig. 2. While the substrate l2 is shown as being a flat annular disk, it will be understood that it can take the form of a truncated cone to conform to the exterior sidewall configuration of the tire. As shown in Fig. 2a, the most rudimentary system employs a flat planar substrate l2 which receives thereon the applique 14. In this embodiment, the applique 14 simply lays upon the flat surface of the substrate l2. Since it is the surface of the applique 14 mating with the substrate l2 which will ultimately be exposed, it is most desirable that the substrate l2 have a finely finished surface such that the exposed surface of the applique will be similarly finely finished. Of course, the substrate l2 may be provided with a surface design which will be imparted to the applique 14.

Fig. 2b shows a system in which the substrate l2 is provided with a recess I6, rectangular in cross section, for receiving and defining the edges of the applique 14. The recess 16 allows for ease of deposit and registration of the applique 14 to the substrate 12 to maintain concentricity between the two. Modifications of the recess within the substrate are shown in Figs. 2c and 2d, both providing recesses which are trapazoidal in cross section, the recess 18 of Fig. 2c having its major base defined by the outer surface of the substrate 12, while the recess 20 of Fig. 2d has its major base internal to the substrate 12 and at the bottom of the recess.

Fig. 2e shows an assembly wherein the recess 22 is configured for unique design features such as lettering, logos, and the like. It is to be understood that the concept of the invention is not limited to the provision of a sidewall band, but that any of numerous design features may be imparted to the tire. In like manner, Fig. 2f shows a substrate 12 having the recess 22 therein and wherein two layers of rubber, possibly of different colors, may be provided in the recess. In Fig. 2f, the line of demarcation between the two colors is designated by the numeral 24, such that the resultant decorative applique would include protrusions of one color and recesses of another.

It is an important feature of the instant invention that the applique 14 is partially precured prior to application to the green tire. This concept of the invention is shown illustratively in Figs. 2g-2i. In Fig. 2g, the entire applique 14 is partially precured in standard process by suitable application of heat or increase in temperature over a course of time to the applique 14. This partial precure gives structural integrity and definition to the applique 14, significantly reducing the propensity to deform when brought into engagement with the tire, under conditions of elevated temperature and pressure, during the molding and curing operation. It also provides such integrity for ease of handling. Of course, the applique 14 is not totally cured since the bonding of the applique 14 to the tire sidewall is achieved during the curing of the green tire itself, at which time the final cure of the applique is achieved.

Fig. 2h demonstrates yet a different type of precure which may be imparted to the applique 14. As shown in this embodiment, a central portion 24 of the applique 14 is precured while the external skin portion is either not precured or is precured to a lesser degree. Accordingly, the external surfaces remain tacky and achieve more efficient bonding with the tire sidewall during the curing operation. In Fig. 2i, the portion 26 of the applique 14 is precured, this being the portion received within the recess I6 of the substrate l2. The remaining portion 28 of the applique 14 is either uncured or precured to a lesser degree, therefore remaining tacky for efficient bonding to the tire. By precuring the portion 26, structural integrity and definition are given

to the applique 14 particularly to that portion of the applique which is exposed to sight when maintained upon the tire.

The precure characteristics described above serve to prevent deformation of the applique during the tire mold and cure operation in which the tire and applique are subjected to significant temperatures and pressures. Deformation of the applique must be avoided to obtain an asthetically pleasing product. The requirement for precure increases with increasing thickness of the applique beyond the recess 16.

The precuring or partial curing as depicted in Figs. 2g-2i may be achieved in various manners as would be readily perceived by one skilled in the art. As will be discussed hereinafter, the applique may be formed by an injection molding process. The precuring is achieved during this operation. Suffice it to say at this time that the precure of Fig. 2g can be achieved by uniformly heating the applique 14 as by heating the injection mold which encloses the applique 14. The precure of Fig. 2h can be achieved by injecting the hot rubber material to form the applique 14 into a mold maintained at a temperature below that of the material to obtain the desired cure gradient. The interior of the applique would thus retain the heat longer and cure while the external surfaces would dissipate the heat to the mold acting as a heat sink. Finally, the precure of Fig. 2i could be achieved by injecting the rubber based material of the applique into a mold having a first portion of the cavity heated as by a platen, with an opposite portion serving as a heat sink, the mold again achieving the selective curing technique.

Figs. 2j and 2k present specifically defined substrates 12 which are adapted to impart ribs into the tire carcass adjacent the applique. In Fig. 2j, two ring-like indentations 30 are concentrically maintained about the applique 14 and on each side thereof. In Fig. 2k a single ring-like indentation 32 is provided concentrically about the applique 14 to impart a protective rib to the green tire during molding. In this case, the rib would be concentric to the sidewall applique about the exterior edge thereof.

Such protective ribs and tire definitions allow the sidewall of the tire to deflect inwardly and protect the sidewall applique upon curbing. It will be understood that the mold portion For defining the ribs may be within the tire mold itself, and not as a part of the ring 12

With attention now to Fig. 21, it can be seen that a rubber barrier or strip 34 may be provided adjacent the surface of the applique 14 which is to be secured to the sidewall of the tire. The barrier of strip 34 acts as a buffer between the applique and the tire sidewall to prevent bleedthrough or discoloration of the applique 14 from the tire material such as by antioxidants, oils, and the like. Preferably, the material 34 is of sufficiently high quality to achieve good bonding with the tire sidewall during cure. The barrier 34 may itself be multilayered and of various materials to achieve the desired function. Of course, the barrier 34 may be first applied to either the tire or the applique.

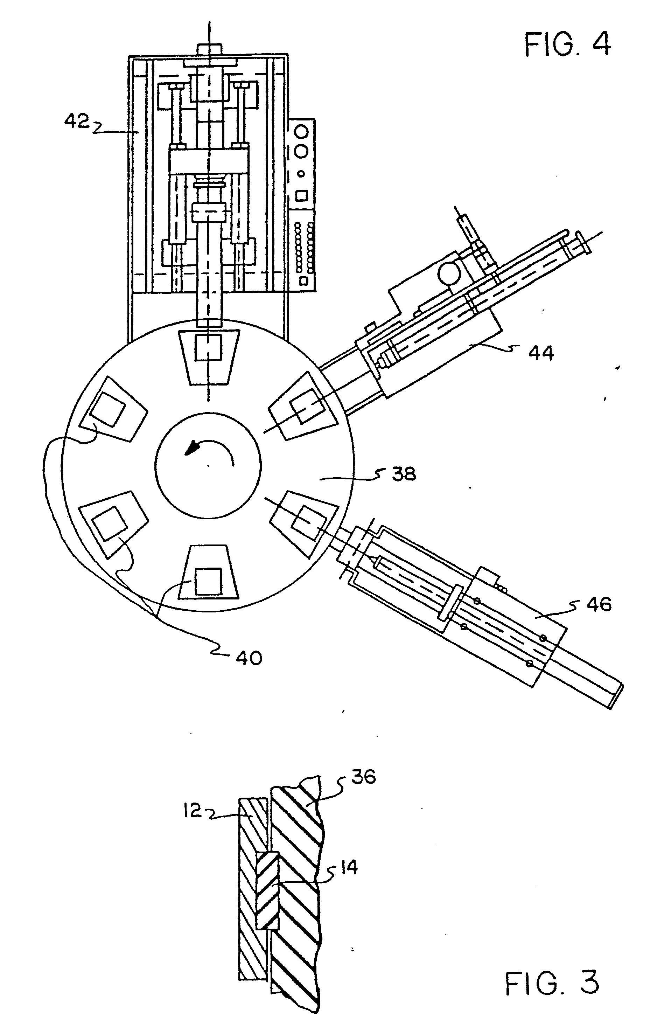

As shown in Fig. 3, the applique 14, carried upon the substrate 12, is imparted to the sidewall of the tire 36 in a curing mold or tire press. As is well known to those skilled in the art, a green tire is placed into the tire mold or press and cured therein as a function of time, temperature, and pressure. It is this same curing operation which achieves the bonding and vulcanization between the precured applique 14 and the tire sidewall 36, making the two substantially inseparable. At the end of the curing cycle, the tire is removed from the mold and the substrate 12 is easily stripped from the sidewall 36 and applique 14. As is well know in the art, the stripping can be facilitated by the addition of a release agent or the like to the substrate 12 prior to depositing the applique 14 thereon.

A schematic illustration of the process of the invention is set forth in Fig. 4. As shown, a carousel or rotary plate 38 is maintained upon and rotated about a spindle. Maintained upon the carousel 38 are a plurality of injection molds 40, in this case six. An injection unit 42 is maintained adjacent the carousel 38 for injecting the rubber based material of the applique 14 into the mold cavities 40. Of course, the injected material is viscous at the time, by virtue of elevated temperature. As discussed above, this temperature aids in the precure process, as does the selective preheating of portions of the molds 40. Also maintained adjacent the carousel 38 is an automatic insert loading device 44 which places substrates 12 into the injection molds 40 as they pass thereby. Accordingly, the injected material is deposited upon an associated substrate 12 and precured thereon as discussed above. A substrate retrieval and mold cleaning device 46 is also positioned adjacent the carousel 38 for removing the precured assemblies 10 from the molds 40 and thereafter cleaning the molds for receipt of another substrate 12 as by the device 44.

In operation, the carousel 38 rotates in a counterclockwise direction as shown in the drawing. At the position of the device 46, the adjacent mold 40 is opened, the applique and substrate assembly 10 is removed, and the mold is cleaned. The assembly 10 is then transferred to and stored in a cartridge from which it may be retrieved for placement in a tire curing mold or press for vulcanization to a green tire. It is contemplated that such a cartridge would receive and store a plurality of assemblies 10. The mold 40 then rotates with the carousel 38 to a point opposite the device 44 where a clean substrate 12 is deposited into the mold. Upon reaching a point opposite the injection unit 42, the mold is held closed by a high pressure force while the rubber based applique material is injected. Subsequently, the mold is locked in its closed position and remains locked as it continues its travel about the carousel 38. The molds my be selectively heated as discussed above to attain the desired precure conditions. By rotating the carousel 38 at the rate of one revolution per minute, approximately 40 seconds elapses from the time of injection of the applique material into the mold until the composite assembly is removed from the carousel 38 by the device 46 and placed into a cartridge for retrieval at a tire mold press. It has been found that such is a sufficient period of time to achieve the desired precure as discussed above. The rate of productivity coupled with the requisite time for achieving the desired precure of the applique dictates the rotational velocity of the carousel 38 and the number of mold cavities 40 employed thereon.

In one example of operating the concept of the invention, the tire mold cavity, in conjunction with the recess 16 of the substrate 12, defined an applique having a thickness of 1,5 cm (0.060 inch) and a width of 1,5 cm. (0.60 inch.) The recess 16 was 0,05 cm (0.020 inch) deep such that the effective thickness of the applique extending from the sidewall of the tire would similarly be 0.05 cm. (0.020 inch.) The injected material was maintained at 193°C (380°F) for a period of 45 seconds and the resultant precure was found to be quite suitable for maintaining the integrity of the applique while achieving good vulcanisation and bonding to the tire.

In general, it has been found that the precure of the rubber based material for the applique can be achieved at a temperature of 149-232°C (300-450°F) for a period of time respectively ranging between 85-20 seconds. As mentioned above, selective heating of mold portions may be used to achieve unique precure configurations. By way of example, if it is desired that the precure be more complete internal than on the external skin of the applique, the injected material may be introduced at a higher temperature than the mold and substrate. Such a precure is shown in Fig. 2h. By selectively heating the substrate 12 and/or cooling the opposite mold surface, the precure of Fig. 2i can be achieved. Finally, by heating and maintaining the temperature of the entire mold and substrate assembly, the precure of Fig. 2g can be attained.

The applique of Fig. 2f, which is multilayered and multicolored, may be achieved by injecting a first color into the mold cavity, subsequently increasing the cavity, and thereafter injecting a second color thereinto.

It has been found that appliques may be developed and imparted to tires using the concept of this invention having thicknesses on the order of 0,05 - 0,15 cm. (0.020-0.060 inch.) Without the precuring of the applique, it has been found that smearing or deformation of the applique gets progressively worse as the thickness of the applique increases and/or as the pressure imparted there to in the curing operation increases. However, when precured, it has been found that even appliques having a thickness of 0.060 inch can be imparted to the sidewall of the tire in a clear and well defined manner without smearing of deformation in standard tire curing operations.

The substrate 12 bearing the precured applique 14 may be retrieved from a retaining cartridge and placed in a tire press by a mechanical arm or the like. The substrate 12 is locked or otherwise secured to a recess in the tire mold such that the substrate will strip from the tire after the curing operation. The mold is then closed with the applique making registered contacting engagement with the sidewall of the tire. The curing process then proceeds in standard fashion.

At the end of the curing cycle, the mold press 44 opens, the substrate 12 is stripped from the tire upon opening, and the tire, with the applique 14 vulcanized thereto, is removed. The substrate 12 is then removed from the mold and a new one, carrying an applique 14, is placed therein for application to a new tire. The removed substrate is cleaned and made available for receipt of a new applique.

It is also contemplated that the applique 14 may be formed by other conventional means such as an extrusion process, the extrudate being received upon the substrate 12 and within the recess 16. Further, the material may be extruded into a conventional mold in which it is thereafter formed by standard processes. By appropriately and selectively regulating the temperature of the extrudate and the substrate 12, the precures of Fig. 2 may be attained.

Thus it can be seen that the objects of the invention have been satisified by the structure presented hereinabove. While in accordance with the patent statutes only the best mode and preferred embodiments of the invention have been presented and described in detail, it is to be understood that the invention is not limited thereto or thereby. Accordingly, for an appreciation of the true scope and breadth of the invention reference should be had to the following claims.

## Claims

1. An assembly for applying decorative pieces to the sidewall of a tire during a molding and curing operation, comprising:

a substrate; and

a partially precured applique out of elastomeric material removably received upon said substrate, said applique being adapted for bonding to the sidewall of the tire by concurrent curing of the tire and applique, characterized in that said precure of said applique varies across a cross section thereof.

2. The assembly according to Claim 1 wherein the inner portion of said applique is cured to a greater degree than either exterior surface.

3. The assembly according to Claim 1 wherein opposite surfaces of a cross section of said applique are of different degrees of precure.

4. The assembly according to Claim 3 wherein a surface of said applique adapted for contacting the tire has a lesser degree of cure than an opposite surface thereof.

5. The assembly according to Claim 4 wherein said substrate has a recess therein for receiving said applique, said precure of said applique being more complete in regions of said applique in contact with said substrate than in regions of said applique not in such contact.

6. The assembly according to Claim 1 wherein said substrate has a recess therein for receiving said applique.

7. The assembly according to Claim 6 wherein said recess has a depth which is less than half the thickness of said applique.

8. A process for applying decorative pieces to a sidewall of a tire, comprising the steps of:

forming an applique upon a substrate;

precuring positioning said applique and substrate upon a sidewall of said tire;

curing said tire and applique with a tire press and thereby bonding said applique to said tire sidewall; and

removing said substrate from said applique,

characterized in that

said applique is formed by injecting and depositing on the substrate an elastomeric material into a mold, said precuring of said applique being realized within said mold and wherein said step of precuring is accomplished by the selective application of heat to various portions of said mold, to achieve different degrees of cure across a cross section of said applique, said tire being uncured at the time of positioning.

9. The process as recited in Claim 8 wherein said substrate is placed into said mold prior to injection of said rubber-based material therein.

10. The process as recited in Claim 8 wherein said substrate is maintained at a higher temperature than remaining portions of said mold in forming contact with said applique.

11. The process as recited in Claim 8 wherein said applique is precured by maintaining said rubber-based material in said mold at a temperature of 149-232°C for a time period respectively ranging between 85-20 seconds.

12. The process as recited in Claim 8 wherein said substrate is securedly received by said tire press and is stripped from the tire and applique upon termination of said curing and opening of said mold.

## Revendications

1. Ensemble pour appliquer des pièces décoratives sur le flanc d'un pneumatique durant une opération de moulage et de cuisson, comportant :

un substrat ; et

une applique partiellement précuite en matière élastomérique reçue de façon amovible sur ledit substrat, ladite applique étant conçue pour être liée au flanc du pneumatique par cuisson simultanée du pneumatique et de l'applique,

caractérisé en ce que la section transversale de ladite forme précuite de ladite applique varie.

2. Ensemble selon la revendication 1 dans lequel la partie intérieure de ladite applique est cuite à un degré supérieur à celui de chaque surface extérieure.

3. Ensemble selon la revendication 1, dans lequel des surfaces opposées d'une section transversale de ladite applique sont à des degrés de précuisson différents.

4. Ensemble selon la revendication 3, dans lequel une surface de ladite applique conçue pour être en contact avec le pneumatique présente un degré de cuisson inférieur à celui d'une surface opposée de l'applique.

5. Ensemble selon la revendication 4, dans lequel ledit substrat présente un évidement destiné à recevoir ladite applique, ladite forme précuite de ladite applique étant plus complète dans des zones de ladite applique en contact avec ledit substrat que dans des zones de ladite applique qui ne sont pas en contact avec le substrat.

6. Ensemble selon la revendication 1, dans lequel ledit substrat présente un évidement destiné à recevoir ladite applique.

7. Ensemble selon la revendication 6, dans lequel ledit évidement a une profondeur qui est inférieure à la moitié de l'épaisseur de ladite applique.

8. procédé pour appliquer des pièces décoratives sur un flanc de pneumatique, comportant les étapes qui consistent :

à former une applique sur un substrat ;

à positionner avec précuisson ladite applique et le substrat sur un flanc dudit pneumatique :

à cuire ledit pneumatique et ladite applique à l'aide d'une presse à pneumatique et à lier ainsi ladite applique audit flanc de pneumatique :

à enlever ledit substrat de ladite applique, caractérisé en ce que

ladite applique est formée par injection et dépôt sur le substrat d'une matière élastomérique dans un moule, ladite précuisson de ladite applique étant réalisée à l'intérieur dudit moule, et

dans lequel ladite étape de précuisson est effectuée par l'application sélective de chaleur à diverses parties dudit moule, afin d'établir différents degrés de cuisson sur une section transversale de ladite applique, ledit pneumatique n'étant pas cuit au moment du positionnement.

9. Procédé selon la revendication 8, dans lequel ledit substrat est placé dans ledit moule avant une injection dans celui-ci de ladite matière à base de caoutchouc.

10. Procédé selon la revendication 8, dans lequel ledit substrat est maintenu à une température supérieure à celle des parties restantes dudit moule en contact de formation avec ladite applique.

11. Procédé selon la revendication 8, dans lequel ladite applique est précuite par maintien de ladite matière à base de caoutchouc dans ledit moule à une température de 149-232°C pendant une période de temps respectivement comprise entre 85 et 20 secondes.

12. Procédé selon la revendication 8, dans lequel ledit substrat est reçu fixement par ladite presse à pneumatique et est décollé du pneumatique et de l'applique à la suite de l'achèvement de ladite cuisson et de l'ouverture dudit moule.

**Patentansprüche**

1. Zusammenbau zum Anbringen von dekorativen Teilen an die Reifenseitenwand während eines Form- und Härtungsverfahrens, umfassend:
ein Substrat; und
ein teilweise vorgehärtetes Ansatzteil aus elastomerem Material, das entfernbar vom Substrat aufgenommen wird, wobei das Ansatzteil mit der Reifenseitenwand durch gemeinsames Härten von Reifen und Ansatzteil verbunden werden kann, dadurch gekennzeichnet, daß sich die Verhärtung des Ansatzteiles über dessen Querschnitt verändert.

2. Zusammenbau nach Anspruch 1, bei dem der innere Teil des Ansatzteils in einem größeren Ausmaß gehärtet ist als die äußere Fläche.

3. Zusammenbau nach Anspruch 1, bei dem die gegenüberliegenden Flächen eines Querschnitts des Ansatzteils in einem unterschiedlichen Ausmaß vorgehärtet sind.

4. Zusammenbau nach Anspruch 3, bei dem eine Fläche des Ansatzteils, die ausgelegt ist, um den Reifen zu berühren, ein geringeres Härtungsausmaß besitzt als deren gegenüberliegende Fläche.

5. Zusammenbau nach Anspruch 4, bei dem das Substrat eine Ausnehmung aufweist, um das Ansatzteil darin aufzunehmen, und wobei die Vorhärtung des Ansatzteils vollständiger in denjenigen Bereichen des Ansatzteils ist, das mit dem Substrat in Kontakt steht, als diejenigen Bereiche des Ansatzteils, die keinen derartigen Kontakt besitzen.

6. Zusammenbau nach Anspruch 1, bei dem das Substrat eine Ausnehmung besitzt, um das Ansatzteil darin aufzunehmen.

7. Zusammenbau nach Anspruch 6, bei dem die Ausnehmung eine Tiefe besitzt, die geringer ist als die halbe Dicke des Ansatzteils.

8. Verfahren zum Anbringen dekorativer Teile auf eine Reifenseitenwand, folgende Stufen umfassend:

Vorsehen eines Ansatzteils auf einem Substrat;

Vorhärten und Positionieren des Ansatzteils und des Substrats auf einer Reifenseitenwand;

Härten des Reifens und des Ansatzteils mit einer Reifenpresse, wodurch das Ansatzteil mit der Reifenseitenwand verbunden wird; und

Entfernen des Substrats vom Ansatzteil,

dadurch gekennzeichnet, daß

das Ansatzteil geformt wird durch Einspritzen und Ablagern eines elastomeren Materials auf dem Substrat in einer Form, und Durchführen der genannten Vorhärtung des Ansatzteils innerhalb der Form, und wobei die Stufe des Vorhärtens erreicht wird durch selektive Anbringung von Wärme an verschiedenen Teilen der Form, um unterschiedliche Härtungsausmaße über den Querschnitt des Ansatzteils zu erzielen, während der Reifen zur Zeit der Positionierung ungehärtet ist.

9. Verfahren nach Anspruch 8, bei dem das Substrat in eine Form hineingegeben wird, bevor das Material auf Gummigrundlage dort hineingespritzt wird.

10. Verfahren nach Anspruch 8, bei dem das Substat bei einer höheren Temperatur gehalten wird als die übrigen Teile der Form unter Ausbildung eines Kontaktes mit dem Ansatzstück.

11. Verfahren nach Anspruch 8, bei dem das Ansatzstück dadurch vorgehärtet wird, daß das Material auf Gummigrundlage in der Form bei einer Temperatur von 149 bis 232° C für eine Zeitspanne im Bereich zwischen 20 bis 85 Sekunden gehalten wird.

12. Verfahren nach Anspruch 8, bei dem das Substat gesichert von der Reifenpresse aufgenommen und vom Reifen und dem Ansatzteil nach Beendigung des Härtens und der Öffnung der Form abgezogen wird.

FIG. 1

FIG.2a    FIG.2b    FIG.2c    FIG.2d    FIG.2e    FIG.2f

FIG.2g    FIG.2h    FIG.2i    FIG.2j    FIG.2k    FIG.2L

EP 0 249 918 B1

FIG. 4

42

44

38

40

46

36

12

14

FIG. 3